# EUROPEAN PATENT SPECIFICATION

(11) **EP 1 641 903 B1**
(45) Date of publication and mention of the grant of the patent: **23.09.2009**
(21) Application number: 04740633.5
(22) Date of filing: 02.07.2004
(51) Int. Cl.: C11B 9/02, B01D 11/02, A61K 36/00

(54) **EXTRACTION METHOD OF ACTIVE MOLECULAR STRUCTURES FROM NATURAL RESINS AND/OR ESSENTIAL OILS**
VERFAHREN ZUR EXTRAKTION VON AKTIVEN MOLEKULARSTRUKTUREN AUS NATURHARZEN UND/ODER ETHERISCHEN ÖLEN
PROCEDE D'EXTRACTION DE STRUCTURES MOLECULAIRES ACTIVES DE RESINES NATURELLES ET/OU D'HUILES ESSENTIELLES

(30) Priority: 08.07.2003 IT MI20031390
(43) Date of publication of application: 05.04.2006
(73) Proprietor: Calegaro Silver Sarda S.R.L., 09132 Cagliari (IT)
(72) Inventor: FOCHESATO, Antonio, I-36015 Schio (Vicenza) (IT)
(74) Representative: De Gregori, Antonella
(86) International application number: PCT/EP2004/007295
(87) International publication number: WO 2005/005583

(56) References cited:
- US-A- 4 596 283
- US-A- 5 061 502
- US-A1- 2003 069 453
- DATABASE WPI Section Ch, Week 198232 Derwent Publications Ltd., London, GB; Class D23, AN 1982-67849E XP002304587 & SU 872 545 B (AROMATIC PLANTS OIL) 15 October 1981 (1981-10-15)
- DATABASE WPI Section Ch, Week 199114 Derwent Publications Ltd., London, GB; Class B05, AN 1991-099160 XP002304588 & JP 03 044357 A (MITSUBISHI KASEI CORP) 26 February 1991 (1991-02-26)

## Description

The present invention relates to an extraction method of active molecular structures from natural resins and/or essential oils.

In particular, it relates to a method for the extraction of terpenes and/or terpenoids from natural resins and/or essential oils.

Natural resins, such as myrrh, incense, dacryodes, propolis, are substances which contain a high quantity of terpenes and terpenoids.

The types of terpenes contained in these natural resins are mainly: sesquiterpenes (C₁₅ structure), diterpenes (C₂₀ structure) and triterpenes (C₃₀ structure).

In the above resins, together with these active substances, there are also sugars starches and Rosinic resins (rosins) and the active substances are imprisoned inside these polymeric components.

In particular, DSC tests effected with a Perkin-Elmer Pyris apparatus on the above natural resins, incense, myrrh, dacryodes and propolis, have shown that these resins have a polymeric-type structure. The polymeric structure is characterized by a Tg equal to 80°C for incense, a Tg equal to 60°C for myrrh and a Tg equal to 85°C for dacryodes.

The DSC plots show that incense has a structure of the amorphous type, with a melting point of 130°C, myrrh has a semi-crystalline structure with a melting point of 140°C, dacryodes has a semi-crystalline structure with a melting point of 250°C.

Among the three resins examined, only dacryodes has the capacity of crystallizing at a temperature of 180°C. The dacryodes resin consequently behaves like a polymer with phase transition, i.e. an amorphous polymer which crystallizes when subjected to heat.

The traditional extraction method of the active substances contained in these resins is extraction in a vapour stream. The extraction system with supercritical CO₂ has also been recently introduced and used for these substances. The extraction method with supercritical CO₂ allows the extraction of a higher number of active substances, with a greater yield, but creates problems of reaction between the substances themselves. For this reason, the most widely used method is still vapour stream extraction.

Through vapour stream extraction, it is possible to extract the following mixtures of compounds, also called essential oils, contained in incense, myrrh, dacryodes and in propolis:
A) INCENSE: the essential oils extracted in a vapour stream from incense prove to consist of:
   - ALPHA PINENE monoterpene;
   - ALPHA THUJENE monoterpene;
   - LIMONENE monoterpene;
   - P-CIMENE monoterpene;
   - BETA-MYRCENE monoterpene;
   - GURJUNEN sesquiterpene;
   - OLIBANOL ketonic alcohol
   with small quantities of other substances. The average extraction yield is equal to 1.70%-2% by weight.
B) MYRRH: the essential oils of myrrh extracted in a vapour stream prove to consist of:
   - FURANEUDESMA-ALPHA-1,3-DIENE sesquiterpene;
   - CURZERENE sesquiterpene;
   - LINDESTRENE sesquiterpene;
   - ELEMENE sesquiterpene;
   - COPAENE terpenoid;
   - 1-CADINOL sesquiterpenoid;
   - GERPMACRENE sesquiterpene
      with small quantities of other substances. The average extraction yield is equal to 2.80%-3% by weight.
C) DACRYODES: extraction in a vapour stream did not allow an essential oil of the commercial type to be obtained.
D) PROPOLIS:
   - 2-methyl-3-butenol
   - 3-penten-2-ol
   - 3-methyl-buten-1-ol
   - toluene
   - 2-methyl-buten-1-ol
   - ethyl-benzene
   - 1,3,5,7-cyclooctatetraene
   - 2-buten-1-ol-3-methyl-acetate
   - benzaldehyde
   - beta-myrcene
   - octanal

Beta-myrcene is the only terpene extracted, with a total extraction of 10 compounds and an average extraction yield of 6%.

Scientific literature (1998) indicates the following compositions for incense and myrrh:
- Incense: 50-70% BOSWELLIC ACIDS;
   4-8% PINENE-PHELLANDRENE-TERPENE ALCOHOLS
   20% RUBBER SUBSTANCES;
   6-8% POLYSACCHARIDES.

The active substances therefore form 73-75% by weight, whereas the inert substances form 28-30% by weight with respect to the total weight of the resin.

From what is specified above, it can be deduced that the major components of incense are Bosellic acids which are triterpenes.

| | | |
|---|---|---|
| - Myrrh: | 30% | DELTA ELEMENE; |
| | 10% | ALPHA COPAENE; |
| | 12% | FURANEUDESMA-1,3-DIENE; |
| | 4% | LINDESTRENE; |
| | 12% | ISOFURANGERMACRENE AND CURZERENONE; |
| | 20% | TRITERPENES; |
| | 12% | STARCHES AND VEGETABLE PROTEINS. |

The active substances therefore form 40% by weight, whereas the inert substances form 60% by weight with respect to the total weight of the resin.

From what is specified above, it can be deduced that triterpenes represent a high quantity in myrrh, equal to 20% by weight of the resin.

From a simple comparison with the data indicated above relating to products extracted in a vapour stream from incense and myrrh, it can be observed that the triterpenes have not been extracted in incense, whereas the triterpenes and part of the sesquiterpenes have not been extracted in myrrh.

The objective of the present invention is therefore to find a new extraction method which allows the disadvantages of the known art indicated above to be overcome.

The object of the present invention consequently relates to an extraction method of terpenes and/or terpenoids from natural resins, such as myrrh, incense, dacryodes, dammar, propolis and/or essential oils, by means of extraction with polar and/or semi-polar solvents in the presence of a rotating magnetic field.

The polar and/or semi-polar solvent is preferably selected from ethanol and ethanol/ethyl ethanoate mixtures.

Even more preferably, the polar and/or semi-polar solvent is ethanol, in particular pharmaceutical ethanol.

Pharmaceutical ethanol refers to extremely pure neutral ethanol 96% vol. with a maximum content of contaminants equal to 0.058 mg/l.

The solvent is present in a quantity which varies from 10 to 90%.

The rotating magnetic field has an intensity varying from 600 to 3000 Gauss, preferably from 1500 to 3000 Gauss.

The extraction is effected at a temperature which ranges from 30°C to 75°C, preferably from 35°C to 60°C and is carried out for a time ranging from 15 to 120 minutes, preferably from 30 to 60 minutes.

An extraction method by means of extraction with ethanol at a temperature ranging from 35°C to 60°C, for a time varying from 30 to 60 minutes, with a rotating magnetic field having an intensity ranging from 1500 to 3000 Gauss, is particularly preferred.

Very surprisingly in fact, the method according to the present invention allows all the active substances present in incense, myrrh, dacryodes and propolis, to be extracted, with the removal of the rubbery part, starches, sugars and vegetable proteins.

It allows the extraction of compounds having molecular weights higher than 600 dalton.

Similarly, the method according to the present invention allows essential oils to be obtained, in which terpenes and/or terpenoids, flavonoids and steroids are present as free molecules. The essential oils, in fact, obtained by extraction in a vapour stream or with supercritical CO₂ are not aerodispersible or at least only to a minimum degree.

A fundamental advantage of the extraction method according to the present invention is that it allows solutions to be obtained at different concentrations. By varying the ratio between time/temperature/magnetic field intensity, it is in fact possible to cover the whole range of extractions of all types of resins and/or essential oils partially soluble in ethanol and ethyl ethanoate and mixtures of these two solvents in any proportion.

A further object of the present invention also relates to the alcohol and/or hydro-alcohol solutions obtained with the extraction method according to the present invention, containing free molecular structures of sesquiterpenes, terpenes, triterpenes, terpenoids, flavonoids and/or steroids.

In particular, these solutions are dispersible in air within the temperature range of 40°C to 90°C, preferably with the use of thermo-emanators or electro-emanators. They are preferably perfectly dispersible in air within the temperature range of 80 to 90°C.

An object of the present invention also relates to the solutions obtained with the extraction method according to the present invention mixed with each other, mixed with all types of essential oil, in any proportion, and/or mixed with water, up to a maximum of 25% of distilled water, whatever the proportion of the solutions with each other may be.

Solutions are preferred, obtained with the extraction method according to the present invention, in a mix, comprising fractions of terpenes and/or terpenoids extracted from incense in a percentage ranging from 15 to 65% by weight, fractions of terpenes and/or terpenoids extracted from myrrh, in a percentage of between 15 and 60% by weight.

Solutions are also preferred obtained by means of the extraction method according to the present invention, which includes fractions of terpenes and/or terpenoids extracted from incense, myrrh and propolis in a mix.

In particular, solutions are also preferred containing Hyssopus officinalis decumbens or Hyssopus officinalis aristatus, green tangerine, fractions of terpenes and/or terpenoids extracted from myrrh and fractions of terpenes and/or terpenoids extracted from incense, in particular proportions equal to about 1:0.3:5:5.

The characteristics and advantages of the extraction method according to the present invention will be more evident from the following detailed and illustrative description, referring to the following example.

### EXAMPLE 1.

A general description follows of the various phases.

Grinding of the resin:
a) grinding of the resins to a particle size of 20 microns using a mill with cross blades. The grinding chamber of the mill is maintained at a temperature of about 15°C to prevent the formation of large-dimensioned agglomerations during the grinding process;
b) the ground product is stored in air-tight containers;
c) the grinding is effected under a suction hood to prevent the depositing of fine powder which, in the case of incense, could cause flammability phenomena in air (flashing).

### Preparation of the solution to be subjected to the extraction process:

The resins thus ground are mixed with pharmaceutical ethanol in a ratio of 10:1 (ten parts of ethanol per one part of resin). The resins are then left to soak in the ethanol for 15 minutes in sealed glass container.

### Extraction:

The ethanol-resin solution is placed in a Pyrex glass flask with a flat bottom and positioned on a heatable magnetic stirrer.

The flask is closed with a sealing glass plug and parafilm.

A magnetic anchor coated with Teflon is placed in the solution. The temperature is regulated at 50°C and the stirring rate is regulated at the maximum value (1,500 rpm).

These operating conditions are maintained for 60 minutes.

The temperature is then brought to 23°C and the stirring rate is decreased (500 rpm).

These conditions are maintained for 15 minutes.

The solutions are left to rest for 30 minutes at room temperature.

The magnetic field is then induced by the rotation of a permanent magnet having a field intensity equal to 3000 Gauss.

### Filtration:

The solutions obtained are filtered using filter paper for qualitative analysis with a filtering capacity of 5 microns, in order to prevent the passage of any particle remaining in solid form.

The solutions are left to rest for 15 minutes and subsequently filtered again using the same type of filter.

### Results:

Limpid solutions with an amber-yellow colour are obtained, absolutely free of impurities and particulate.

### Analysis of the solutions obtained

Analysis of the alcohol solutions thus obtained was effected by means of Mass gas-chromatography (GC/MS and GC/FID) using a Hewlett-Packard HP 6890 instrument with Supelco SBP-5 and Supelco-wax 10 columns.

### Solution prepared starting from incense.

The extraction method according to the present invention starting from incense as natural resin produced a solution in which the following compounds were identified:
alpha pinene,
alpha thujene,
(+) limonene,
p-cymene,
beta-myrcene,
2-propyl-5-methylnaphthoquinone,
furandiene,
cembrene A (cembra-3,7,11,15-tetraone),
1-isopropenyl-3-propenylcyclopentane,
germacrene A,
2-N-butyl-8-N-hexyl-1,2,3,4-tetrahydronaphthalene,
verticellol (Verticilia (20) 7,11-triene),
aciphyllylic alcohol,
pentacyclododecane,
globulol 1H-cyclopropen(e)azulene,
17-alpha-methyl-5-alpha-androstane,
1,5-dimethoxy-2,6-bis (prop-2'-enyl)anthraquinone,
E-Ocimenone 2,6-dimethyloctane,
Trunculin-F methyl ester,
4,7-methanoisobenzofuran-1-ol 1,2,3°4,7,7° hexahydro
Eicosane,
4,8-decadienoic acid 2-acetyl 2,5,9 trimethyl
Longicyclene,
7-hydroxyoctanoic acid 2TMS,
Aristolone 2H-cyclopropene-naphthalen-2-one,
beta-boswellic acid,
acetyl beta-boswellic acid,
11-keto-beta-boswellic acid,
acetyl 11-keto-boswellic acid,
trans-octahydro-5,5-dimethyl-8a-tosyloxymethyl 2
11-H indene (1.2-B) quinoxalin-11-11H-indenol
3A-hydroxyolean-12-en-24 boswellic acid,
Total active products present: 32.
Extraction yield: 56% out of a total of 72-75% of active substances.

### Solution prepared starting from myrrh.

The extraction method according to the present invention starting from myrrh as natural resin produced a solution in which the following compounds were identified:
alpha-terpinene para-mentha 1,3-diene,
beta-bourbonene,
delta-elemene,
trans-caryophyllene,
6-ethenyl-4,5,6,7-tetrahydro 5-benzofuranacetic acid, 1-cyclohexene-1-carbonaldehyde,
gamma-cardinene,
germacrene B
2-ter-butyl-1,4-naphthoquinone,
(+)hepi-bicyclosesquiphellandrene,
furaneudesma-1,3-alpha diene,
Ledene alcohol,
alpha-longipinene,
alpha-copaene,
1-ethyl-1,2,3,4-tetrahydro 2-naphthalenemethanol,
benzylthio-6-methylluracin 2 (1H) pyrimidinone,
1,3-dimethyl-5-azulenecarbaldehyde,
dibenzofuranol-1,4-dicarbaldehyde 1,3-naphthalenate,
germacrene A,
2-isopropyl-4,7-dimethyl-1-naphthol,
bicyclogermacrene,
lindestrene,
4-(phenylmethyl)phenol,
amino-3(1)imidazo (4,5H)quinoline,
methyl 5-hydroxy-3-oxo-5-phenylpentanoate,
2-cyclohexyl-1-(1H-imidazol-2-yl)ethanone
beta-amirine,
(Urs-12-ene,3-methoxy,3 beta) beta-commiphoric acid.
Total active products present: 28.
Extraction yield: 35% out of a total of 40% of active substances.

### Solution prepared starting from dacryodes.

The extraction method according to the present invention starting from dacryodes as natural resin produced a solution in which the following compounds were identified:
delta-elemene,
alpha-copaene,
beta-bourbonene,
beta-elemene,
trans-caryophillene,
alpha-amorphene,
beta-silenene,
germacrene B,
caryophyllene oxide,
epicurzerenone,
1,4-dimethyl-7-(1-methylethyl)-azulen-2-ol,
alpha-cadinol,
furandiene,
2-isopropylquinoline-beta-D6,
vulgarol A,
phenoxazone,
seychelene,
1-naphthalenemethanol alpha, alpha-dimethyl-5,
2,3 dihydroindole-4-ol-2-one,
2-pentyl-1H-quinolin-4-one,
1,1,4,6,7-pentamethyl-2,3-dihydroindene,
dibenzothiophene,
germacrene A,
2-isopropyl-4,7-dimethyl-1-naphthol,
4-quinolinol, 2 pentyl-N-oxide,
methyl-3-methyl-2-thiophenecarboxylate,
2(5H)furanone, 3 butyryl-5-hexyl-4-hydroxy-5-methyl duvantriendiol,
1,2-epoxynonane,
(+) alpha-ciperone,
6,6-dimethylundecane 1,11dyl bis (2-hydroxy-5-(2-carot)-1,4-dienaldehyde.
Total active products present: 32
Extraction yield: 13%.

It is not possible to calculate a ratio between the extracted quantities and the total quantity of active substances, as no composition for this resin has been cited in literature.

The triterpene compounds were identified not only with the GC/MS system but also by means of gas chromatograph in liquid phase (HPLC) in UV light in a wave length of 210 nm.

### EXAMPLE 2

A general description of the different phases is provided.

### Grinding of the resin

a) Propolis is in the physical form of very consistent waxy cakes. Grinding is effected in order to obtain an average diameter of the particles ranging from 80 to 100 microns, making use of a crossed blade mill. The grinding chamber of the mill is maintained at a temperature of 15-18°C to prevent the formation of large dimensional clumps during the grinding.
b) The ground product is stored in a hermetically sealed container.
c) Grinding, is effected under a fume hood in order to prevent deposition of fine powders which can give rise to flashing phenomena.

### Preparation of the solution to be subjected to the extraction process:

The propolis thus ground is mixed with pharmaceutical ethanol in the ratio 7:1 (seven parts of ethanol per one part of resin). The resin is left to soak in ethanol for 30 minutes in a sealed glass container.

### Extraction:

The ethanol-propolis solution is poured into a Pyrex glass flask with a flat bottom and placed on a heated magnetic stirrer. The flask is closed by means of a sealing glass plug and parafilm. A magnetic, Teflon-lined anchor is placed in the solution. The temperature is regulated at 40°C and the stirring rate at the maximum value(1,500 rpm).

These operating conditions are maintained for 45 minutes. The temperature is then lowered to 23°C and the stirring rate to 500 rpm. These conditions are maintained for 30 minutes at room temperature. The magnetic field is then induced by the rotation of a permanent magnet with an intensity of 3,000 Gauss.

### Filtration

The solution obtained is filtered by means of a paper filter for qualitative analysis having a filtering capacity of 5 microns, in order to prevent the passage of any small particles in solid form.

The solution is left to rest for 15 minutes and then filtered again.

The resulting filtrate is left to rest for a further 15 minutes and is then filtered again, still using the same type of filter.

### Results:

A limpid brown-coloured solution is obtained, absolutely free of impurities and particulate.

### Solution prepared starting from propolis.

The extraction method according to the present invention, starting from propolis as natural resin, gave a solution in which the following compounds were identified by means of GC/MS and GC/FID analysis:
guaiole;
10-epi-gamma-eudesmole;
beta-eudesmole;
2-propenoic acid;
isopropyl tetradecanoate;
alpha-eudesmole;
8-beta-H-cedran-8-ole;
ethyl ester of heptanoic acid;
n-pentacosane;
butyl ester of hexadecanoic acid;
n-tetracosane;
butyl stearate;
androstan-4-en-3-one;
hexacosane;
benzo[c]naphthol[2,1-p]crysene;
dihydroxymethylcalcone;
colesteryl myristate;
Total active products present: 17.
Extraction yield: 80% out of a total of 85-90% of active substances.

A propolis solution is then obtained, by means of the method of the present invention, in which terpenes, terpenoids, flavonoids and steroids are present as free molecules.

In particular, the propolis solution analyzed above, refers to a particular type of propolis produced in Northern Italy, more precisely in the Asiago/Lavorano-Folgaria plateau. It is known that propolis has a composition which varies according to the type of flora of the area where the beehives are positioned.

### Miscibility of the solutions.

The solutions extracted prove to be miscible with each other in all proportions.

### Miscibility with essential oils.

The solutions extracted prove to be miscible with all types of essential oils in any proportion with each other.

### Miscibility with water.

The solutions extracted prove to be miscible with water up to a maximum of 25% of distilled water whatever the proportion of the solutions with each other.

### Evaporation and aero-dispersion

The solutions extracted are completely aero-dispersible within a temperature range of 40°C to 90°C with the use of thermo-emanators or electro-emanators as described in Italian patent Nr. 1287235.

### Concentration

The extraction method according to the present invention also allows solutions to be obtained at different concentrations.

By varying, in fact, the ratio between time/temperature/magnetic field intensity, it is possible to cover the whole range of extractions of all types of resins and/or essential oils partially soluble in:
- Ethanol (CH₃CH₂OH)
- Ethyl ethanoate (CH₃CO₂CH₂)
and mixtures of these two solvents in any proportion with each other.

This characteristic makes the extraction method according to the present invention extremely versatile and elastic and allows the extraction and preparation of alcohol and/or hydro-alcohol solutions containing the active principles in different concentrations according to the end-use of the product.

Specific characteristics of the alcohol and/or hydro-alcohol solutions obtained with the extraction method according to the present invention are the following.

Contrary to normal essential oils extracted in a vapour stream, or with supercritical CO₂ and normal alcohol and/or hydro-alcohol solutions obtained from natural resins, the solutions extracted from natural resins and/or essential oils, produced with the method according to the present invention, allow not only monoterpenes and some sesquiterpenes, but also all (C₁₅) sesquiterpenes, (C₂₀) diterpenes and (C₃₀) triterpenes, flavonoids and steroids, to be dispersible in air.

This is possible because the single solute molecular structures are free molecules. The magnetic field, in fact, releases the molecular structures of the terpenes and/or terpenoids from the polymeric part of the resins made up of starches, rubber based on isoprene and rosinic resin (rosin).

Analogously, in the case of essential oils, the process according to the present invention allows solutions of essential oils to be obtained, in which the single solute molecular structures, terpenes and/or terpenoids, are free molecules.

This was not possible so far with the known extraction systems including systems using N₂ and H₂O in supercritical form.

The essential oils and mixtures of compounds extracted from resins in a vapour stream or with supercritical gases are not made up of free molecules and when they are heated to temperatures exceeding 50°C, they interact forming new molecular structures, in particular compounds of the rubber type (isoprene, rosin) which cross-link forming a solid polymeric structure which is therefore absolutely non-aero-dispersible.

The method according to the present invention forms an absolute novelty in the field of terpene and/or terpenoid extraction from natural resins such as incense, myrrh, dacryodes, dammar, propolis.

The method according to the present invention very surprisingly also allows triterpenes such as boswellic acids and commiphoric acids, having the formula C₃ₒH₄₈O₃, C₃₀H₄₈O₅, C₃₀H₅₀O₃, to be aero-dispersed in a controlled quantity and time.

### Aero-dispersion of the solutions.

The method according to the present invention very surprisingly allows solutions to be obtained, containing aero-dispersible compounds with a vast rang of molecular weights from MW 136 (monoterpenes) to MW 532 (pentacyclic triterpenes), and with a molecular weight higher than 600 dalton.

It is therefore possible to contemporaneously disperse in air terpenes and/or terpenoids with a different molecular weight, which varies within the range of MW 136 to MW 532.

This means that all terpenes and/or terpenoids contained in natural resins or in essential oils can be dispersed in the air in a different time depending on the temperature.

In practice, the dispersion time at 50°C proves to be 240 minutes, whereas at 90°C it is 60 minutes.

In particular the following compositions are described, obtained by mixing the fractions of terpenes and/or terpenoids extracted by means of the method according to the present invention.

### Composition nr. 1

A composition is described, obtained by mixing the following components in the amounts indicated with respect to 1 ml of composition. Incense and myrrh are the terpene and/or terpenoid fractions extracted from incense and myrrh according to the method of the present invention, as described in example 1, whereas Hyssopus officinalis decumbens consists of the fractions extracted according to the method of the present invention from the essential oil Hyssopus officinalis decumbens.

| | |
|---|---|
| Hyssopus officinalis decumbens | 0.0271 ml; |
| green tangerine | 0.0075 ml; |
| myrrh | 0.125 ml; |
| incense | 0.125 ml; |
| ethanol | 0.5854 ml; |
| distilled water | 0.130 ml. |

### Composition nr. 2

A composition is described, obtained by mixing the following components in the amounts indicated with respect to 1 ml of composition. Incense and myrrh are the terpene and/or terpenoid fractions extracted from incense and myrrh according to the method of the present invention, as described in example 1, whereas Hyssopus officinalis aristatus consists of the fractions extracted according to the method of the present invention from the essential oil Hyssopus officinalis aristatus.

| | |
|---|---|
| Hyssopus officinalis aristatus | 0.0271 ml; |
| green tangerine | 0.0075 ml; |
| myrrh | 0.125 ml; |
| incense | 0.125 ml; |
| ethanol | 0.5954 ml; |
| distilled water | 0.120 ml. |

### Composition nr. 3

A composition is described, obtained by mixing composition nr. 1 and the fractions of terpenes and/or terpenoids extracted from propolis as described in example 2. The values are volume percentages.

| | |
|---|---|
| Composition n-r. 1 | 80%; |
| propolis | 20%. |

### Composition nr. 4

A composition is described, obtained by mixing composition nr. 2 with the fractions of terpenes and terpenoids extracted from propolis as described in example 2. The values are volume percentages.

| | |
|---|---|
| Composition nr. 2 | 80%; |
| propolis | 20%. |

In particular, the compositions according to the present invention can be used as aero-dispersible solutions and as solutions for topic use.

## Claims

1. A method for the extraction of terpenes and/or terpenoids from natural resins or essential oils by means of extraction with polar and/or semi-polar solvents in the presence of a rotating magnetic field.

2. The method according to claim 1, **characterized in that** the natural resins are incense, myrrh, dacryodes , dammar and/or propolis.

3. The method according to claim 1, **characterized in that** the polar and/or semi-polar solvent is selected from ethanol and mixtures of ethanol/ethyl ethanoate.

4. The method according to claim 3, **characterized in that** the polar and/or semi-polar solvent is pharmaceutical ethanol.

5. The method according to claim 1, **characterized in that** the solvent is present in a quantity varying from 10 to 90% by weight.

6. The method according to claim 1, **characterized in that** the rotating magnetic field has an intensity ranging from 500 to 3000 Gauss, preferably from 1500 to 3000 Gauss.

7. The method according to claim 1, **characterized in that** the extraction is carried out at a temperature ranging from 30°C to 75°C, preferably from 35°C to 60°C.

8. The method according to claim 1, **characterized in that** the extraction is carried out for a time ranging from 15 to 120 minutes, preferably from 30 to 60 minutes.

9. The method according to claim 1, **characterized in that** the extraction is carried out at a temperature ranging from 35°C to 60°C, for a time ranging from 30 to 60 minutes, with a rotating magnetic field which has an intensity varying from 1500 to 3000 Gauss.

10. Alcohol and/or hydro-alcohol solutions obtainable with the method according to any of the previous claims, **characterized in that** they contain free molecular structures of sesquiterpenes, terpenes, triterpenes.

11. The solutions according to claim 10, **characterized in that** they are dispersible in air within a temperature range of 40°C to 90°C.

12. The solutions according to claim 11, **characterized in that** they are dispersible in air within a temperature range of 80°C to 90°C.

13. The solutions according to claim 11 or 12, **characterized in that** they are dispersible in air with the use of thermo-emanators or electro-emanators.

14. The solutions according to claim 10, **characterized in that** they are used in a mixture with each other, in a mixture with all types of essential oil, in any proportion, and/or in a mixture with water, up to a maximum of 25% of distilled water, whatever the proportion of the solutions between each other may be.

15. The solutions according to any of the claims from 10 to 14, **characterized in that** they are solutions in ethanol and/or ethyl ethanoate, in any proportion.

16. The solutions according to any of the claims from 10 to 15, **characterized in that** they contain aero-dispersible compounds, terpenes and/or terpenoids, with a molecular weight which varies within the range of MW 136 (monoterpenes) to MW 532 (pentacyclic triterpenes).

17. The solutions according to claim 10, **characterized in that** they contain fractions of terpenes and/or terpenoids extracted from incense in a percentage of between 15 and 65% by weight, fractions of terpenes and/or terpenoids extracted from myrrh in a percentage of between 15 and 65% by weight.

18. The solutions according to claim 17, **characterized in that** they contain Hyssopus officinalis decumbens or Hyssopus officinalis aristatus, green tangerine, fractions of terpenes and/or terpenoids extracted from myrrh and fractions of terpenes and/or terpenoids extracted from incense.

19. The solutions according to claim 18, **characterized in that** they contain Hyssopus officinalis decumbens or Hyssopus officinalis aristatus, green tangerine, fractions of terpenes and/or terpenoids extracted from myrrh and fractions of terpenes and/or terpenoids extracted from incense in proportions equal to 1:0.3:5:5.

20. The solutions according to claim 10, **characterized in that** they contain fractions of terpenes and/or terpenoids extracted from incense, myrrh and propolis in a mixture with each other.

21. The solutions according to claim 10, **characterized in that** they are topically applied.

## Patentansprüche

1. Verfahren zur Extraktion von Terpenen und/oder Terpenoiden aus natürlichen Harzen oder etherischen Ölen mittels Extraktion mit polaren und/oder semipolaren Lösungsmitteln in Gegenwart eines rotierenden Magnetfeldes.

2. Verfahren gemäß Anspruch 1, **dadurch gekennzeichnet, dass** die natürlichen Harze Weihrauch, Myrrhe, Dacryodes (Räucherharz), Dammarharz und/oder Propolis sind.

3. Verfahren gemäß Anspruch 1, **dadurch gekennzeichnet, dass** das polare und/oder semipolare Lösungsmittel aus Ethanol und Gemischen von Ethanol/Ethylethanoat ausgewählt ist.

4. Verfahren gemäß Anspruch 3, **dadurch gekennzeichnet, dass** das polare und/oder semipolare Lösungsmittel pharmazeutisches Ethanol ist.

5. Verfahren gemäß Anspruch 1, **dadurch gekennzeichnet, dass** das Lösungsmittel in einer Menge vorliegt, die von 10 bis 90 Gew.-% variiert.

6. Verfahren gemäß Anspruch 1, **dadurch gekennzeichnet, dass** das rotierende Magnetfeld eine Intensität im Bereich von 500 bis 3000 Gauss, vorzugsweise von 1500 bis 3000 Gauss, hat.

7. Verfahren gemäß Anspruch 1, **dadurch gekennzeichnet, dass** die Extraktion bei einer Temperatur im Bereich von 30°C bis 75°C, vorzugsweise von 35°C bis 60°C, durchgeführt wird.

8. Verfahren gemäß Anspruch 1, **dadurch gekennzeichnet, dass** die Extraktion für eine Zeit im Bereich von 15 bis 120 Minuten, vorzugsweise von 30 bis 60 Minuten, durchgeführt wird.

9. Verfahren gemäß Anspruch 1, **dadurch gekennzeichnet, dass** die Extraktion bei einer Temperatur im Bereich von 35°C bis 60°C für eine Zeit im Bereich von 30 bis 60 Minuten mit einem rotierenden Magnetfeld, das eine Intensität hat, die von 1500 bis 3000 Gauss variiert, durchgeführt wird.

10. Alkohol- und/oder Wasser-Alkohol-Lösungen, erhältlich mit dem Verfahren gemäß einem der vorangehenden Ansprüche, **dadurch gekennzeichnet, dass** sie freie Molekülstrukturen von Sesquiterpenen, Terpenen und Triterpenen enthalten.

11. Lösungen gemäß Anspruch 10, **dadurch gekennzeichnet, dass** sie in einem Temperaturbereich von 40°C bis 90°C in Luft dispergierbar sind.

12. Lösungen gemäß Anspruch 11, **dadurch gekennzeichnet, dass** sie in einem Temperaturbereich von 80°C bis 90°C in Luft dispergierbar sind.

13. Lösungen gemäß Anspruch 11 oder 12, **dadurch gekennzeichnet, dass** sie unter Verwendung von Thermoemanatoren oder Elektroemanatoren in Luft dispergierbar sind.

14. Lösungen gemäß Anspruch 10, **dadurch gekennzeichnet, dass** sie in einem Gemisch miteinander, in einem Gemisch mit allen Typen an etherischem Öl, in beliebigem Verhältnis und/oder im Gemisch mit Wasser bis zu einem Maximum von 25% destilliertem Wasser, wie auch immer das Verhältnis der Lösungen untereinander sein kann, verwendet werden.

15. Lösungen gemäß einem der Ansprüche 10 bis 14, **dadurch gekennzeichnet , dass** sie Lösungen in Ethanol und/oder Ethylethanoat in einem beliebigen Verhältnis sind.

16. Lösungen gemäß einem der Ansprüche 10 bis 15, **dadurch gekennzeichnet , dass** sie in Luft dispergierbare Verbindungen, Terpene und/oder Terpenoide mit einem Molekulargewicht, das in einem Bereich von MG 136 (Monoterpene) bis MG 532 (pentacyclische Triterpene) variiert, enthalten.

17. Lösungen gemäß Anspruch 10, **dadurch gekennzeichnet, dass** sie Fraktionen von Terpenen und/oder Terpenoiden, extrahiert aus Weihrauch, in einem prozentualen Anteil von zwischen 15 und 65 Gew.-%, Fraktionen von Terpenen und/oder Terpenoiden, extrahiert aus Myrrhe, in einem prozentualen Gehalt von zwischen 15 und 65 Gew.-% enthalten.

18. Lösungen gemäß Anspruch 17, **dadurch gekennzeichnet, dass** sie Hyssopus officinalis decumbens oder Hyssopus officinalis aristatus, grüne Tangerine, Fraktionen von Terpenen und/oder Terpenoiden, extrahiert aus Myrrhe, und Fraktionen von Terpenen und/oder Terpenoiden, extrahiert aus Weihrauch, enthalten.

19. Lösungen gemäß Anspruch 18, **dadurch gekennzeichnet, dass** sie Hyssopus officinalis decumbens oder Hyssopus officinalis aristatus, grüne Tangerine, Fraktionen von Terpenen und/oder Terpenoiden, extrahiert aus Myrrhe, und Fraktionen von Terpenen und/oder Terpenoiden, extrahiert aus Weihrauch, in Verhältnissen enthalten, die 1:0,3:5:5 entsprechen.

20. Lösungen gemäß Anspruch 10, **dadurch gekennzeichnet, dass** sie Fraktionen von Terpenen und/oder Terpenoiden, extrahiert aus Weihrauch, Myrrhe und Propolis, im Gemisch miteinander enthalten.

21. Lösungen gemäß Anspruch 10, **dadurch gekennzeichnet, dass** sie topisch angewendet werden.

## Revendications

1. Procédé d'extraction de terpènes et/ou de terpénoïdes de résines naturelles ou d'huiles essentielles au moyen d'une extraction avec des solvants polaires et/ou semi-polaires en présence d'un champ magnétique rotatif.

2. Procédé selon la revendication 1, **caractérisé en ce que** les résines naturelles sont l'encens, la myrrhe, les dacryodes, le dammar et/ou la propolis.

3. Procédé selon la revendication 1, **caractérisé en ce que** le solvant polaire et/ou semi-polaire est choisi parmi l'éthanol et des mélanges d'éthanol/éthanoate d'éthyle.

4. Procédé selon la revendication 3, **caractérisé en ce que** le solvant polaire et/ou semi-polaire est l'éthanol pharmaceutique.

5. Procédé selon la revendication 1, **caractérisé en ce que** le solvant est présent en une quantité variant de 10 à 90 % en poids.

6. Procédé selon la revendication 1, **caractérisé en ce que** le champ magnétique rotatif possède une intensité située dans la plage allant de 500 à 3 000 Gauss, de préférence de 1 500 à 3 000 Gauss.

7. Procédé selon la revendication 1, **caractérisé en ce que** l'extraction est réalisée à une température située dans la plage allant de 30 °C à 75 °C, de préférence de 35 °C à 60 °C.

8. Procédé selon la revendication 1, **caractérisé en ce que** l'extraction est réalisée pendant une durée située dans la plage allant de 15 à 120 minutes, de préférence de 30 à 60 minutes.

9. Procédé selon la revendication 1, **caractérisé en ce que** l'extraction est réalisée à une température située dans la plage allant de 35 °C à 60 °C, pendant une durée située dans la plage allant de 30 minutes à 60 minutes, avec un champ magnétique rotatif possédant une intensité variant de 1 500 à 3 000 Gauss.

10. Solutions alcooliques et/ou hydro-alcooliques pouvant être obtenues avec le procédé selon l'une quelconque des revendications précédentes, **caractérisées en ce qu'**elles contiennent des structures moléculaires libres de sesquiterpènes, de terpènes, de triterpènes.

11. Solutions selon la revendication 10, **caractérisée en ce qu'**elles sont dispersibles dans l'air dans une plage de températures allant de 40 °C à 90 °C.

12. Solutions selon la revendication 11, **caractérisé en ce qu'**elles sont dispersibles dans l'air dans une plage de températures allant de 80 °C à 90 °C.

13. Solutions selon la revendication 11 ou 12, **caractérisé en ce qu'**elles sont dispersibles dans l'air au moyen de thermo-émanateurs ou d'électro-émanateurs.

14. Solutions selon la revendication 10, **caractérisées en ce qu'**elles sont utilisées en mélange les unes avec les autres, en mélange avec des huiles essentielles de tous types, en toute proportion, et/ou en mélange avec de l'eau, jusqu'à un maximum de 25 % d'eau distillée, quelle que puisse être la proportion des solutions les unes par rapport aux autres.

15. Solutions selon l'une quelconque des revendications 10 à 14, **caractérisées en ce qu'**elles sont des solutions dans l'éthanol et/ou l'éthanoate d'éthyle, en toute proportion.

16. Solutions selon l'une quelconque des revendications 10 à 15, **caractérisées en ce qu'**elles contiennent des composés aéro-dispersibles, des terpènes et/ou des terpénoïdes, ayant un poids moléculaire variant dans la plage allant de 136 (monoterpènes) à 532 (triterpènes pentacycliques).

17. Solutions selon la revendication 10, **caractérisées en ce qu'**elles contiennent des fractions de terpènes et/ou de terpénoïdes extraites de l'encens en un pourcentage situé entre 15 et 65 % en poids, des fractions de terpènes et/ou de terpénoïdes extraites de la myrrhe en un pourcentage situé entre 15 et 65 % en poids.

18. Solutions selon la revendication 17, **caractérisées en ce qu'**elles contiennent de l'Hyssopus officinalis decumbens ou de l'Hyssopus officinalis aristatus, de la tangerine verte, des fractions de terpènes et/ou de terpénoïdes extraites de la myrrhe et des fractions de terpènes et/ou de terpénoïdes extraites de l'encens.

19. Solutions selon la revendication 18, **caractérisées en ce qu'**elles contiennent de l'Hyssopus officinalis decumbens ou de l'Hyssopus officinalis aristatus, de la tangerine verte, des fractions de terpènes et/ou de terpénoïdes extraites de la myrrhe et des fractions de terpènes et/ou de terpénoïdes extraites de l'encens en des proportions égales à 1 : 0,3 : 5 : 5.

20. Solutions selon la revendication 10, **caractérisées en ce qu'**elles contiennent des fractions de terpènes et/ou de terpénoïdes extraites de l'encens, de la myrrhe et de la propolis en mélange les unes avec les autres.

21. Solutions selon la revendication 10, **caractérisées en ce qu'**elles sont appliquées par voie topique.
